# EUROPEAN PATENT APPLICATION

(11) **EP 2 068 300 A1**
(43) Date of publication of application: **10.06.2009**
(21) Application number: 08169421.8
(22) Date of filing: 19.11.2008
(51) Int. Cl.: G09G 3/34

(54) **Light emitting device and display device having the same**

(30) Priority: 27.11.2007 KR 20070121524
(71) Applicant: Samsung SDI Co., Ltd., Suwon-si Gyeonggi-do (KR)
(72) Inventor: Kang, Mun-Seok, Gyeonggi-do (KR)
(74) Representative: Hengelhaupt, Jürgen

(57) **Abstract**

A light emitting device (40) and a display device (1) using the light emitting device (40) as a light source and including a panel assembly (10). The panel assembly has a gate lines (30) for transferring gate signals, data lines (32) for transferring data signals, and pixels at crossing regions of the gate lines (30) and the data lines (32). The light emitting device provides a light source to the panel assembly. The light emitting device (40) has a plurality of light emission pixels, and each light emission pixel corresponds to at least one of the pixels of the panel assembly (10). The display device has a brightness controller (200) coupled to both the light emitting device (40) and the panel assembly (10). The brightness controller (200) generates and serializes light emission information signals for determining light emission levels of the light emission pixels and transmits the light emission information signals by differential signaling to the light emitting device (40).

## Description

### BACKGROUND OF THE INVENTION

### 1. Field of the Invention

The present invention relates to a display device and, more particularly, to a light emitting device operating in synchronization with a displayed image and a display device having the same.

### 2. Description of the Related Art

A liquid crystal display (LCD), a type of flat panel display, is a display device that displays an image by changing light transmittance of pixels by using dielectric anisotropy of liquid crystal whose helix angle changes according to an applied voltage. Compared with a cathode ray tube, another type of image display device, an LCD has advantages in that it is light, thin, and consumes low power.

The LCD generally includes a liquid crystal panel assembly and a light emitting device that is positioned behind the liquid crystal panel assembly and provides light to the liquid crystal panel assembly.

If the liquid crystal panel assembly is an active liquid crystal panel assembly, it includes a pair of transparent substrates, a liquid crystal layer positioned between the transparent substrates, polarizers on outer surfaces of the transparent substrates, a common electrode provided on an inner surface of one of the transparent substrates, pixel electrodes and switching elements provided on an inner surface of another of the transparent substrates, and color filters giving red, green, and blue colors to three subpixels constituting a single pixel. The liquid crystal panel assembly receives light emitted from a light emitting device and allows the light to be transmitted or blocked by the action of the liquid crystal layer to display an image.

In order to allow the light emitting device to adjust local brightness, information about the image displayed by the liquid crystal panel assembly should be supplied to the light emitting device, and the light emitting device should operate in synchronization with the pixels of the liquid crystal panel assembly. For this purpose, signals for controlling the light emitting device should be generated from input video signals. The signals should be accurately transferred to a controller of the light emitting device. However, the signals for controlling the light emitting device may be distorted due to noise caused, for example, by electromagnetic interference. The effect of signal distortion may vary depending on the configuration of the LCD.

The above information disclosed in this background section is only for enhancement of understanding of the background of the invention and therefore it may contain information that does not form the prior art that is already known in this country to a person of ordinary skill in the art.

### SUMMARY OF THE INVENTION

Aspects of embodiments of the present invention are directed toward a light emitting device that accurately receives signals for controlling the light emitting device and a display device using a light emitting device.

An embodiment of the present invention provides a display device including a panel assembly including a plurality of gate lines for transferring a plurality of gate signals, a plurality of data lines for transferring a plurality of data signals, and a plurality of pixels at crossing regions of the plurality of gate lines and the plurality of data lines; a light emitting device for providing a light source to the panel assembly, the light emitting device including a plurality of light emission pixels, each of the plurality of light emission pixels corresponding to at least one of the plurality of pixels of the panel assembly; and a brightness controller coupled to both the light emitting device and the panel assembly, wherein the brightness controller is adapted to generate and serialize light emission information signals for determining light emission levels of the plurality of light emission pixels and to transmit the light emission information signals by differential signaling to the light emitting device.

Differential signaling may be low voltage differential signaling (LVDS) or reduced swing differential signaling (RSDS).

The light emitting device may include a device controller for receiving the light emission information signals, and the controller may be adapted to deserialize and parallelize differential signals, and to generate light emission signals for determining the light emission levels of the plurality of light emission pixels.

The light emission information signals may include a clock signal and light emission data signals, and the device controller may be adapted to generate a control signal for transferring each of a plurality of signals to each of the plurality of corresponding light emission pixels according to the clock signal and to generate the light emission signals according to the light emission data signals.

The light emission information signals may be grouped in frames and the device controller may be adapted to distinguish each frame by detecting an initial bit of a respective one of the light emission data signals.

The light emitting device may further include a plurality of scan lines for transferring a plurality of scan signals and a plurality of column lines for transferring a plurality of light emission data voltages, and the plurality of light emission pixels may be at crossing regions of the plurality of scan lines and the plurality of column lines.

The control signal may include a light emission control signal and a scan driving control signal, and the light emitting device may additionally include: a column driver for generating the plurality of light emission data voltages corresponding to the light emission signals according to the light emission control signals and transferring the plurality of light emission data voltages to the plurality of respective column lines; and a scan driver for transferring each of the plurality of scan signals alternately having first and second levels to the plurality of corresponding scan lines according to the scan driving control signal.

Each of the light emission pixels may include a gate electrode and a cathode electrode, and emit light according to a voltage difference between the gate electrode and the cathode electrode.

The first level may be a voltage level for making the light emission pixels emit light, and the second level may be a voltage level for making the light emission pixels not emit light.

The panel assembly may be a liquid crystal display panel.

Another embodiment of the present invention provides a light emitting device including a plurality of scan lines that transfer a plurality of scan signals, a plurality of column lines that transfer a plurality of light emission data signals, and a plurality of light emission pixels corresponding to intersections of the plurality of scan lines and the plurality of column lines; a controller that receives serialized light emission information signals by differential signaling, and generates light emission signals for indicating light emission levels of the plurality of light emission pixels and a control signal for transferring light emission data voltages corresponding to the light emission signals to each of the plurality of corresponding light emission pixels; a column driver that generates the plurality of light emission voltages according to the control signal and transfers the plurality of light emission data voltages to each of the plurality of corresponding light emission pixels; and a scan driver that transfers a plurality of scan signals alternately having first and second levels to each of the plurality of corresponding light emission pixels according to the control signal.

The differential signaling may be low voltage differential signaling (LVDS) or may be reduced swing differential signaling (RSDS).

The controller may be adapted to deserialize and parallelize differential signals, and to generate the light emission signals and the control signal according to the light emission information signals.

The light emission information signals may include a clock signal and the plurality of light emission data signals, and the controller may be adapted to generate a control signal for transferring each of a plurality of signals to each of the plurality of corresponding light emission pixels according to the clock signal and to generate the light emission signals according to the light emission data signal.

The light emission information signals may be grouped in frames and the controller may be adapted to distinguish each frame by detecting an initial bit of the light emission data signal.

### BRIEF DESCRIPTION OF THE DRAWINGS

The accompanying drawings, together with the specification, illustrate exemplary embodiments of the present invention, and, together with the description, serve to explain the principles of the present invention.

FIG. 1 is an exploded perspective view of a liquid crystal display (LCD) according to an exemplary embodiment of the present invention.

FIG. 2 is a partially cut-away perspective view of the liquid crystal panel assembly of FIG. 1.

FIG. 3 is a partial cut-away perspective view of a light emitting device according to a first exemplary embodiment of the present invention.

FIG. 4 is a partial cross-sectional view of the light emitting device of FIG. 3.

FIG. 5 is a partial top plan view of an electron emitting unit of a light emitting device according to a second exemplary embodiment of the present invention.

FIG. 6 is a partial cut-away perspective view of a light emitting device according to a third exemplary embodiment of the present invention.

FIG. 7 is a schematic block diagram of a display device according to the third exemplary embodiment of the present invention.

FIG. 8 is an equivalent circuit diagram of a pixel of the display device according to the third exemplary embodiment of the present invention.

FIG. 9 is a timing diagram of interface signals according to the third exemplary embodiment of the present invention.

FIG. 10 is a view showing a transmission end of a local brightness controller and a reception end of a controller in the display device according to the third exemplary embodiment of the present invention.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising" will be understood to imply the inclusion of stated elements but not the exclusion of any other elements. Furthermore, in the context of the present application, when an element is referred to as being "on" another element, it can be directly on the another element or be indirectly on the another element with one or more intervening elements interposed therebetween.

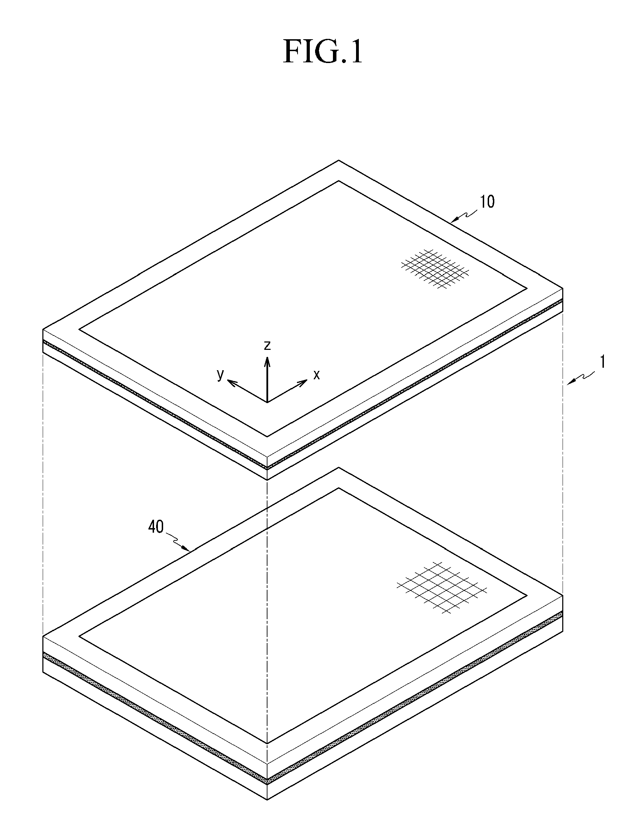

FIG. 1 is an exploded perspective view of a liquid crystal display (LCD) according to an exemplary embodiment of the present invention. With reference to FIG. 1, a liquid crystal display (LCD) 1 includes a liquid crystal panel assembly 10 having pixels arranged in a row direction and in a column direction and a light emitting device 40 having a smaller number of pixels than that of the liquid crystal panel assembly 10 arranged in the row direction and in the column direction. The light emitting device 40 is positioned behind the liquid crystal panel assembly 10, and provides light to the liquid crystal panel assembly 10.

The row direction may be defined as one direction of the LCD 1, e.g., as a horizontal direction (e.g., an x-axis direction in the drawing) of a screen implemented by the liquid crystal panel assembly 10, and the column direction may be defined as another direction of the LCD 1, e.g., as a vertical direction (e.g., a y-axis direction in the drawing) of the screen implemented by the liquid crystal panel assembly 10. If the number of pixels of the liquid crystal panel assembly 10 and the number of pixels of the light emitting device 40 in the row direction are M and M', respectively, and the number of pixels of the liquid crystal panel assembly 10 and the number of pixels of the light emitting device 40 in the column direction are N and N', respectively, then the resolution of the liquid crystal panel 10 may be expressed by MxN and that of the light emitting device 40 may be expressed by M'xN'. In this exemplary embodiment, M and N indicating the number of rows and columns of pixels of the liquid crystal panel assembly 10 may be 240 or larger, and M' and N' indicating the number of rows and columns of pixels of the light emitting device 40 may be between 2 and 99.

Each pixel of the light emitting device 40 is positioned such that it may illuminate two or more pixels of the liquid crystal panel assembly 10. ON/OFF operation and light emission strength of the pixels of the light emitting device 40 are individually controlled by driving electrodes arranged in a matrix form, e.g., scan electrodes positioned perpendicularly to data electrodes.

In the present exemplary embodiment, one pixel of the light emitting device 40 includes a field emission array (FEA) type of electron emission element. The FEA type electron emission element includes a scan electrode, a data electrode, an electron emission region electrically connected with the scan electrode and the data electrode, and a light emission layer. The electron emission region may be made of a material having a low work function and/or a material having a high aspect ratio, e.g., a carbon-based material or a nanometer-size material. The FEA type electron emission element forms an electric field around the electron emission region by using a voltage difference between the scan electrode and the data electrode. The electric field in the electron emission region causes it to emit electrons. The emitted electrons excite a phosphor layer. The phosphor layer then emits visible light of a strength corresponding to the strength of the electric field.

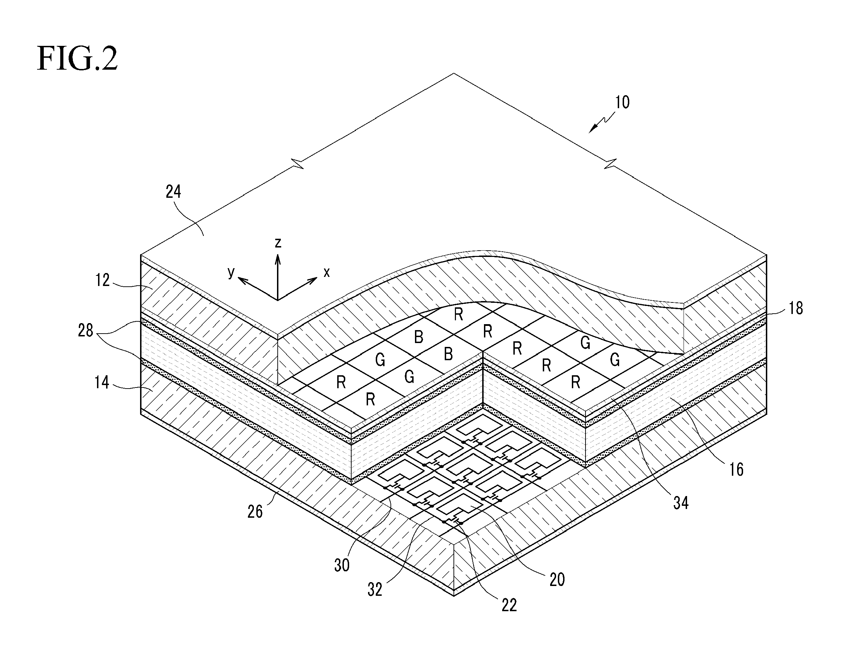

FIG. 2 is a partially cut-away perspective view of the liquid crystal panel assembly of FIG. 1. As shown in FIG. 2, the liquid crystal panel assembly 10 includes first and second transparent substrates 12 and 14 that are positioned to face each other, a liquid crystal layer 16 injected between the first and second substrates 12 and 14, a common electrode 18 positioned on an inner surface of the first substrate 12, and pixel electrodes 20 and switching elements 22 positioned on an inner surface of the second substrate 14. A sealing member is positioned between the edges of the first and second substrates 12 and 14.

The first substrate 12 is a front substrate of the liquid crystal panel assembly 10, and the second substrate 14 is a rear substrate of the liquid crystal panel assembly 10. Two polarizers 24 and 26 are positioned on outer surfaces of the first and second substrates 12 and 14, and polarization axes of the polarizers 24 and 26 are perpendicular to each other. The inner surface of the first substrate 12 on which the common electrode 18 is positioned and the inner surface of the second substrate 14 on which the pixel electrodes 20 and switching elements 22 are positioned are covered with alignment layers 28.

Gate lines 30 for transferring gate signals (also called scan signals) and data lines 32 for transferring data signals are formed on the inner surface of the second substrate 14. The gate lines 30 are positioned parallel to each other along the row direction, and the data lines 32 are positioned parallel to each other along the column direction.

Color filters 34 are disposed between the first substrate 12 and the common electrode 18. The color filters 34 include red, green, and blue filters. Each filter corresponds to one subpixel, and three subpixels where the red, green, and blue filters are positioned constitute one pixel.

A pixel electrode 20 is positioned at every subpixel. Each subpixel includes the switching element 22 connected to the gate line 30 and the data line 32 and a liquid crystal capacitor Clc and a storage capacitor Cst that are also connected to the switching element 22. The storage capacitor Cst may be omitted in some embodiments. The switching element 22 may be a thin film transistor (TFT) that has a control terminal connected to the gate line 30, an input terminal connected to the data line 32, and an output terminal connected to the liquid crystal capacitor Clc.

In the liquid crystal panel assembly 10 having the above-described configuration, when switching element 22 is turned on, an electric field is formed between the pixel electrodes 20 and the common electrode 18. The electric field makes helix angles in the material of the liquid crystal layer 16 change to control light transmittance of each subpixel to thus display a color image.

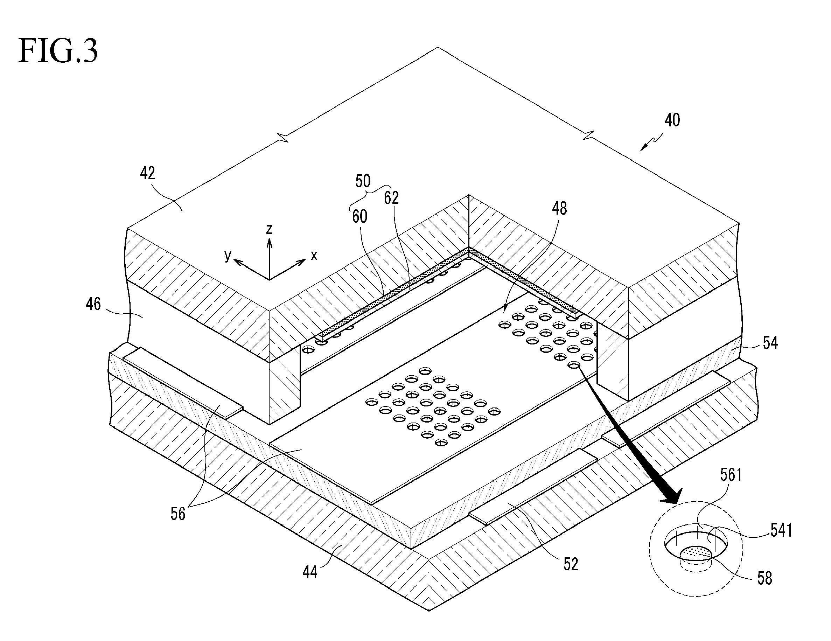

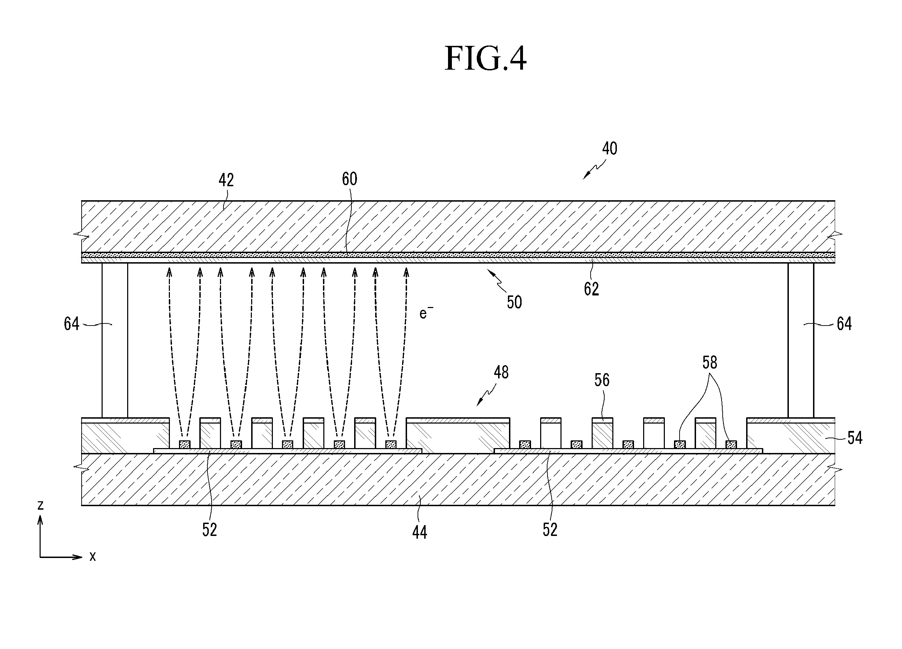

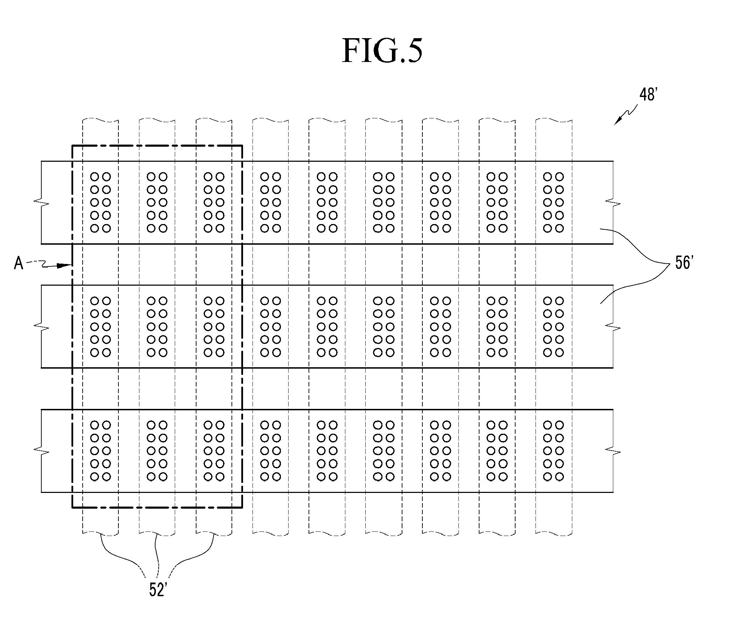

A first example of the light emitting device will be described with reference to FIGs. 3 and 4, and a second example of the light emitting device will be described with reference to FIG. 5. The examples include an FEA type of electron emission display panel with FEA type electron emission elements.

FIG. 3 is a partial cut-away perspective view of a light emitting device according to a first exemplary embodiment of the present invention, and FIG. 4 is a partial cross-sectional view of the light emitting device with its electron emitting unit in FIG. 3. With reference to FIGs. 3 and 4, the light emitting device 40 includes third and fourth substrates 42 and 44 disposed to face each other and separated by a gap. A sealing member 46 is disposed on edges (or edge portions) of the third and fourth substrates 42 and 44 to attach the two substrates. An inner space between the third and fourth substrates 42 and 44 is vacuumized with a pressure between about 10 torr to 6 torr. Thus, the third substrate 42, the fourth substrate 44, and the sealing member 46 form a vacuum container.

The third substrate 42 is a front substrate of the light emitting device 40 and faces toward the liquid crystal panel assembly 10, and the fourth substrate 44 is a rear substrate of the light emitting device 40. An electron emitting unit 48 for emitting electrons is on a surface of the fourth substrate 44 facing the third substrate 42, and a light emitting unit 50 is on one surface of the third substrate 42 facing the fourth substrate 44.

The electron emitting unit 48 includes cathode electrodes 52 in a stripe pattern along one direction of the fourth substrate 44, gate electrodes 56 in a stripe pattern along a direction crossing (or perpendicular to) the cathode electrodes 52 with an insulation layer 54 interposed therebetween. Electron emission regions 58 are electrically connected to cathode electrodes 52.

The gate electrodes 56 may be disposed side by side along a row direction of the fourth substrate 44, and may serve as scan electrodes upon receiving a scan driving voltage. The cathode electrodes 52 may be disposed side by side along a column direction of the fourth substrate 44, and may serve as data electrodes upon receiving a data driving voltage.

The electron emission regions 58 are formed at respective crossings of the cathode electrodes 52 and the gate electrodes 56. Openings 541 and 561 corresponding to the respective electron emission regions 58 are formed at the insulation layer 54 and the gate electrodes 56, exposing the electron emission regions 58. In the present exemplary embodiment, the crossings of the cathode electrodes 52 and the gate electrodes 56 correspond to pixel regions of the light emitting device 40.

The electron emission regions 58 are made of a material, e.g., a carbon-based material or a nanometer-size material that emits electrons when an electric field is applied in a vacuum state. The electron emission regions 58 may be made of a material such as carbon, nanotubes, graphite, graphite nanofiber, diamond, diamond-like carbon, C60, silicon nanowire, or their combinations. The electron emission regions 58 may be fabricated by screen printing, direct growing, chemical vapor deposition (CVD), sputtering, or the like. The electron emission regions 58 may also have a shape with a sharp tip and utilize a material such as molybdenum (Mo) or silicon (Si).

The light emission unit 50 on the third substrate 42 includes a phosphor layer 60 and an anode electrode 62 positioned on one surface of the phosphor layer 60. The phosphor layer 60 may be a white phosphor layer or may have a structure combining red, green, and blue phosphor layers.

The white phosphor layer may be formed on the entire third substrate 42, or selectively positioned in a pattern such that white phosphor is positioned at each pixel region. The red, green, and blue phosphor layers may be selectively positioned in patterns in the pixel regions.

The anode electrode 62 may be made of a metallic film, for example, aluminum (AI), covering the surface of the phosphor layer 60. The anode electrode 62 is an accelerating electrode that attracts electron beams by having a high voltage (typically a positive DC voltage of thousands of volts) to maintain the phosphor layer 60 in a high potential state. The anode electrode 62 may also serve to increase the luminance of the screen by reflecting a portion of the visible light emitted toward the fourth substrate 44 from among the visible light emitted from the phosphor layer 60 back toward the third substrate 42.

In the above-described configuration, the FEA type of electron emission element includes the cathode electrode 52, the gate electrode 56, electron emission regions 58, and the corresponding phosphor layer 60 constituting a single pixel.

In the above-described configuration, when a driving voltage is applied to the cathode electrodes 52 and the gate electrodes 56, an electric field is formed around the electron emission regions 58 at a pixel region. When a voltage difference between the two electrodes is higher than a threshold value, electrons are emitted from the electron emission region. The emitted electrons are attracted to the anode electrode 62 by the high voltage applied and then cause light emission in the phosphor layer 60. The strength of light emission of the phosphor layer 60 corresponds to the amount of emission of electrons in the corresponding pixels.

FIG. 5 is a partial top plan view of an electron emitting unit 48' of the light emitting device according to a second exemplary embodiment of the present invention. With reference to FIG. 5, a single pixel area A includes two or more combinations of cathode electrodes 52' and gate electrodes 56'. In the case where two or more cathode electrodes 52' and two or more gate electrodes 56' are combined to form a single pixel area A, the two or more cathode electrodes 52' are electrically connected to each other to receive the same driving voltage and the two or more gate electrodes 56' are also electrically connected to each other to receive the same driving voltage.

The two or more cathode electrodes 52' and the two or more gate electrodes 56' may extend to edges (or edge portions) of the fourth substrate 44 to allow end portions mounted on a connection member, for example, a flexible printed circuit board (FPCB), to be connected to each other. FIG. 5 shows the case, for example, where nine crossings of three cathode electrodes 52' and three gate electrodes 56' form the single pixel area A.

In both the first and second examples of the light emitting devices, spacers 64 (shown in FIG. 4) are disposed between the third and fourth substrates 42 and 44 to support a compression force caused by to the vacuum container and uniformly maintain the gap between the two substrates. The spacers 64 may be positioned at an outer portion of the pixel area and omitted at a central portion of the pixel area.

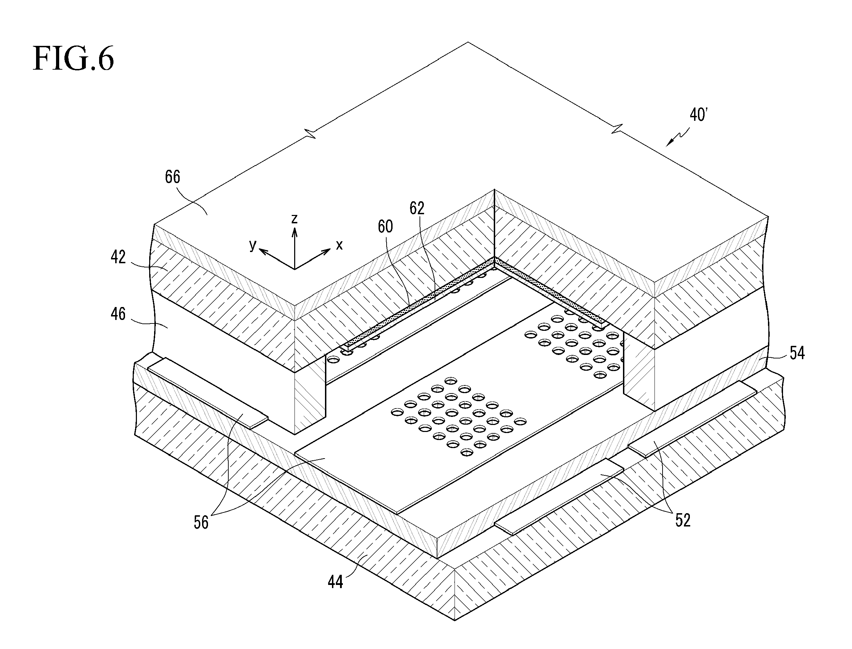

FIG. 6 shows a third exemplary embodiment of the present invention that includes a light diffuser. The third substrate 42, which is the front substrate, may have a light diffusion function to serve as a diffuser. That is, a diffuser 66 having a light diffusion function may be positioned on an outer surface of the third substrate 42 facing the liquid crystal panel assembly 10.

The LCD 1 according to the present exemplary embodiment uses the light emitting device 40', which is a low-resolution light emitting device having a smaller number of pixels than that of the pixels of the liquid crystal panel assembly 10, as a backlight. Such light emitting device 40' may be driven by a passive matrix method using scan electrodes and data electrodes. Light of different intensities is provided to corresponding pixels of the liquid crystal panel assembly 10. Thus, the LCD 1 according to the present exemplary embodiment has the following enhancements as compared with a CCFL type of light emitting device or an LED type of light emitting device.

That is, because the light emitting device 40' is a surface light source, it does not need optical members as would be used for CCFL type and the LED type of light emitting devices. Thus, the light emitting device 40' does not suffer a light loss when light passes through optical members, and because the light emitting device 40' does not need to emit light of excessively high intensity in consideration of such light loss, it can obtain good efficiency with low power consumption. In addition, because the light emitting device 40' consumes a smaller amount of power compared with the CCFL type of light emitting device and does not use an optical member, it can save the corresponding costs and incur a low fabrication cost as compared with the LED type of light emitting device. Also, the light emitting device 40' may be easily fabricated in a large size and may be easily employed for an LCD of 30 inches or larger.

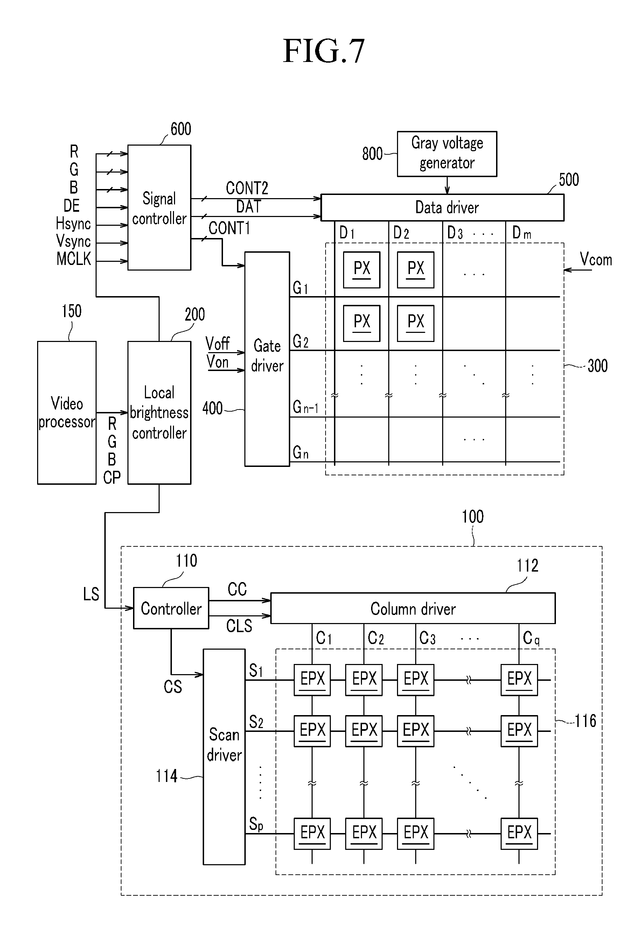

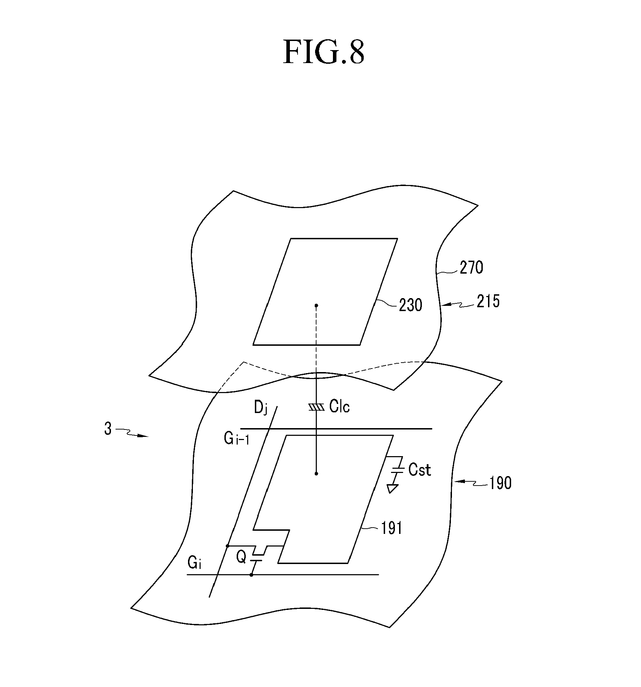

FIG. 7 is a schematic block diagram of a display device according to the third exemplary embodiment of the present invention. The display device according to the third exemplary embodiment of the present invention is an LCD that employs a liquid crystal element as a light receiving element. However, the present invention is not limited thereto. FIG. 8 is an equivalent circuit diagram of a pixel of the LCD according to the third exemplary embodiment of the present invention. The display device according to the third exemplary embodiment of the present invention uses the above-described light emitting device as a backlight. Reference numeral 100 denotes the light emitting device in the third exemplary embodiment of the present invention.

With reference to FIG. 7, the LCD according to an exemplary embodiment of the present invention includes a light emitting device 100, a video processor 150, a local brightness controller 200, a liquid crystal panel assembly 300, a gate driver 400, a data driver 500, a gray voltage generator 800, and a signal controller 600.

As shown in FIG. 7, image sources transmitted from sources, such as computers or television receivers, are received by the video processor 150 and converted into input video signals R, G, and B and a display control signal CP according to the resolution of the LCD. The generated input video signals and display control signal CP are received by the local brightness controller 200. The display control signal CP includes video control signals Hsync, Vsync, MCLK, and DE required for displaying the input video signals R, G, and B.

The local brightness controller 200 processes the input video signals R, G, and B and the display control signal CP to extract brightness information corresponding to the input video signals and transfers a light emission information signal LS to the light emitting device 100. The local brightness controller 200 reads the input video signals and the display control signal CP to detect the highest gray level among a set of pixels PX corresponding to one light emission pixel EPX of the light emitting device and thus determines a gray level of the light emission pixels EPX corresponding to the detected gray level. The local brightness controller 200 generates the light emission information signal LS according to the determined gray level and the position of the light emission pixel EPX. Then, the local brightness controller 200 transfers the input video signals R, G, and B and the input video control signals Hsync, Vsync, MCLK, and DE to the signal controller 600.

The liquid crystal panel assembly 300 includes signal lines G₁-Gₙ and D₁-Dₘ and a plurality of pixels connected with the signal lines G₁-Gₙ and D₁-Dₘ and arranged substantially in a matrix form. Gate lines G₁-Gₙ transfer gate signals (also called scan signals), and data lines D₁-Dₘ transfer data voltages. The gate lines G₁-Gₙ extend substantially in a row direction and are substantially parallel to each other, and the data lines D₁-Dₘ extend substantially in a column direction and are substantially parallel to each other.

As shown in FIG. 8, each pixel PX, for example a pixel PXij connected with the ith (i=1, 2, .., n) gate line Gᵢ and the jth (j=1, 2, ..., m) data line Dⱼ, includes a switching element Q connected with the signal lines Gi and Dj, and a liquid crystal capacitor Clc and a storage capacitor Cst that are connected with the switching element Q. The storage capacitor Cst may be omitted in some embodiments. The switching element Q is a three-terminal element, such as a thin film transistor (TFT), provided on a lower panel 190, which includes a control terminal connected with the gate line Gᵢ, an input terminal connected with the data line Dⱼ, and an output terminal connected with the liquid crystal capacitor Clc and the storage capacitor Cst.

The liquid crystal capacitor Clc uses a pixel electrode 191 of the lower panel 190 and a common electrode 270 of an upper panel 215 as two terminals, and a liquid crystal layer 3 between the two electrodes 191 and 270 serves as a dielectric material. The pixel electrode 191 is connected with the switching element Q, and the common electrode 270 is formed on the entire surface of the upper panel 215 and receives a common voltage (Vcom). In an alternative embodiment to the case as shown in FIG. 8, the common electrode 270 may be provided on the lower panel 190, and in this case, at least one of the two electrodes 191 and 270 may be formed in a linear or bar shape.

The storage capacitor Cst that serves as an auxiliary to the liquid crystal capacitor Clc is formed as a separate signal line on the lower panel 190 and the pixel electrode 191 overlapping it with an insulator interposed therebetween, and a voltage, such as the common voltage Vcom, is applied to the separate signal line. Also, the storage capacitor Cst may be formed by the pixel electrode 191 overlapping the immediately previous gate line Gᵢ-1 by the medium of the insulator.

In order to implement a color display, each pixel PX may display one primary color (spatial division) or the pixels PX may display the primary colors over time (temporal division), so that a desired color can be recognized by the spatial or temporal sum of the primary colors. The primary colors may be, for example, three primary colors of light such as red, green, and blue. FIG. 8 shows one example of the spatial division in which each pixel PX includes a color filter 230 that displays one of the primary colors at a region of the upper panel 215 corresponding to the pixel electrode 191. At least one polarizer is provided on the liquid crystal panel assembly 300.

With reference back to FIG. 7, the gray voltage generator 800 generates all gray voltages or a limited number of gray voltages (referred to as reference gray voltages hereinafter) related to the transmittance of the pixels PX. The gray voltages may include a reference gray voltage of a positive value or a reference gray voltage of a negative value with respect to the common voltage Vcom.

The gate driver 400 is connected with the gate lines G₁-Gₙ of the liquid crystal panel assembly 300 and applies a gate signal including a gate-on voltage Von and a gate-off voltage Voff to the gate lines G₁-Gn.

The data driver 500 is connected with the data lines D₁-Dₘ of the liquid crystal panel assembly 300, and selects a gray voltage from the gray voltage generator 800 and applies it as a data voltage to the data lines D₁-Dₘ. However, if the gray voltage generator 800 does not provide all the gray voltages but provides only a limited number of reference gray voltages, the data driver 500 combines the reference gray voltages to generate desired data voltages. The signal controller 600 controls the gate driver 400 and the data driver 500.

The operation of the LCD will now be described in more detail. The signal controller 600 receives input video signals R, G, and B and input control signals for controlling display of the input video signals from the local brightness controller 200. The input video signals R, G, and B include luminance information of each pixel PX. The luminance information commonly includes 1024 (=2¹⁰), 256 (=2⁸), or 64(=2⁶) levels. The input control signals include, for example, a vertical synchronization signal Vsync, a horizontal synchronization signal Hsync, a main clock signal MCLK, and a data enable signal DE.

The signal controller 600 appropriately processes the input video signals R, G, and B according to operational conditions of the liquid crystal panel assembly 300 based on the input control signals to generate a digital video signal DAT, a gate control signal CONT1, and a data control signal CONT2. The signal controller 600 transmits the gate control signal CONT1 to the gate driver 400 and transmits the data control signal CONT2 and the processed digital video signal DAT to the data driver 500.

The gate control signal CONT1 includes a vertical scanning start signal STV for instructing start of scanning, and a clock signal for controlling an output period of the gate-on voltage Von. The gate control signal CONT1 may additionally include an output enable signal OE for limiting duration of the gate-on voltage Von.

The data control signal CONT2 includes a horizontal synchronization start signal STH for signaling start of transmission of the digital video signal DAT for one row of pixels PX to the data driver 500, and a load signal LOAD for indicating application of an analog data voltage to the data lines D₁-Dₘ. The data control signal CONT2 may include an inversion signal for inverting the polarity of the data voltage with respect to the common voltage Vcom. The data driver 500 selects a gray voltage corresponding to the digital video signal DAT to generate an analog data voltage and apply the voltage to corresponding data lines D₁-Dₘ.

The gate driver 400 applies the gate-on voltage Von to the gate lines G₁-Gₙ according to the gate control signal CONT1 from the signal controller 600 to turn on the switching elements Q connected with the gate lines G₁-Gₙ. Then, the data voltage, which has been applied to the data lines D₁-Dₘ, is applied to the corresponding pixels PX through the turned-on switching elements Q.

A difference between the data voltage applied to the pixels PX and the common voltage Vcom appears as a charge voltage, namely a pixel voltage, on the liquid crystal capacitor Clc. Arrangement of liquid crystal molecules varies according to the size of the pixel voltage, and polarization of light that transmits through the liquid crystal layer 3 changes accordingly. The change in polarization leads to a change in transmittance of light by the polarizer, thereby the pixels PX display luminance represented by the gray level of the digital video signal DAT.

This process is repeatedly performed for each horizontal period (namely, 1 H, which is equivalent to one period of the horizontal synchronization signal Hsync) in order to sequentially apply the gate-on voltage Von to all the gate lines G₁-Gₙ and the data voltage to all the pixels PX to thus display an image of one frame.

The light emitting device 100 includes a controller (or a device controller) 110, a column driver 112, a scan driver 114, and a display unit 116. In the present exemplary embodiment, scan lines S₁-Sₚ serve as gate electrodes (56 in FIG. 6) of the light emission pixels EPX, and column lines C₁-Cq serve as cathode electrodes (52 in FIG. 6) of the light emission pixels EPX and are connected with electron emission regions (58 in FIG. 3).

The scan driver 114 is connected to the scan lines S₁-Sₚ and transfers scan signals to allow the light emission pixels EPX to emit light in synchronization with the liquid crystal pixels PX according to a scan driving control signal CS. The scan signals have a scan-on voltage VN having a voltage level set to allow the electron emission regions 58 to emit electrons, and a scan-off voltage VF having a voltage level set to not allow the electron emission regions 58 to emit electrons.

The column driver 112 is connected with the column lines C₁-C_{q} and controls the light emission pixels EPX to emit light corresponding to gray scales of the liquid crystal pixels EX according to a light emission control signal CC and a light emission signal CLS. The column driver 112 generates light emission data voltages according to the light emission signal CLS, and transfers the voltages to the column lines C₁-C_{q} according to the light emission control signal CC. Specifically, the column driver 112 synchronizes one light emission pixel EPX such that the light emission pixel EPX emits light with a certain gray level according to an image displayed at the plurality of liquid crystal pixels PX corresponding to the one light emission pixel EPX.

The display unit 116 includes the scan lines S₁-Sₚ for transferring scan signals, the column lines C₁-C_{q} for transferring light emission data signals, and the light emission pixels EPX. The light emission pixels EPX are positioned at areas corresponding to the crossings or intersections of the scan lines S₁-Sₚ and the column lines C₁-C_{q}. The scan lines S₁-Sₚ are connected with the scan driver 114, and the column lines C₁-C_{q} are connected with the column driver 112. The scan driver 114 and the column driver 112 are connected with the controller 110 and operate according to a control signal of the controller 110.

The controller 110 receives the light emission information signal LS and generates the light emission control signal CC, the light emission signal CLS, and the scan driving control signal CS. The controller 110 generates the light emission signal CLS according to the light emission information signal LS, and transfers the light emission signal CLS to the column driver 112. The controller 110 generates the light emission control signal CC and the scan driving control signal CS by using the light emission information signal LS. The scan driving control signal CS includes a vertical scan start signal STV1 indicating a start of scanning, and at least one clock signal controlling an output period of the scan-on voltage VN.

The light emission control signal CC includes a horizontal synchronization start signal STH1 indicating a start of transmission of the light emission signal CLS to the column driver 112 for one row of the pixels EPX, and a load signal LOAD indicating application of a light emission data signal according to the light emission signal CLS to the column lines C₁-C_{q}.

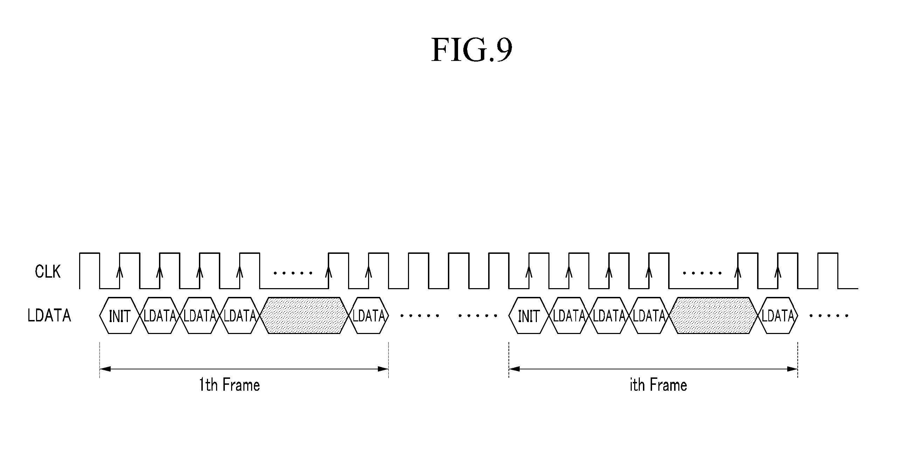

FIG. 9 shows the timing of clock signal CLK and the light emission data signal LDATA included in the light emission information signal LS according to the third exemplary embodiment of the present invention. The controller 110 can distinguish each frame with the clock signal CLK and the light emission data signal LDATA, and discern which one of the plurality of light emission pixels EPX, the information corresponds to. In detail, an initial bit INIT included in the light emission data signal LDATA indicates a start of one frame. The controller 110 counts the clock signals CLK to detect positions of the corresponding light emission pixels EPX. That is, the controller 110 counts rising edges where the clock signal CLK changes from a low level to a high level, and detects which one of the light emission pixels EPX the light emission data signal LDATA corresponds to, to thus calculate address information identifying the corresponding light emission pixel EPX.

For example, if the display unit 116 has a matrix form including forty horizontal light emission pixels EPX and twenty-four vertical light emission pixels EPX, the total number of light emission pixels EPX is 960. The controller 110 determines that a first rising edge of clock CLK corresponds to an initial bit INIT and starts counting from a second rising edge of clock CLK to sample the light emission data signals LDATA to the forty-first rising edge to determine that they correspond to the forty light emission pixels EPX positioned at a first row. In this case, light emission data signal LDATA sampled at the second rising edge of clock CLK is a light emission data signal corresponding to the leftmost light emission pixel EPX among the forty light emission pixels EPX positioned at the first row. Light emission data signal LDATA sampled at the third rising edge of clock CLK is a light emission data signal corresponding to the light emission pixel EPX second from the left among the forty light emission pixels EPX positioned at the first row. Light emission data signal LDATA sampled at a forty-first rising edge of clock CLK is a light emission data signal corresponding to the rightmost light emission pixel EPX among the forty light emission pixels EPX positioned at the first row. In this manner, the rows and columns of the light emission pixels EPX are calculated according to the clock CLK to accurately calculate addresses of the light emission pixels EPX corresponding to the light emission data signals LDATA.

The controller 110 may generate the light emission control signal CC and the scan driving control signal CS required for driving the light emitting device 100 by using clock CLK or clock signals having a different frequency generated from clock CLK or from detection of the initial bit INIT. In this manner, the controller 110 generates the light emission signal CLS, the light emission control signal CC, and the scan driving control signal CS by using clock CLK and light emission data signal LDATA for each frame. In the third exemplary embodiment of the present invention, the light emission data signal LDATA is an 8-bit digital signal that can represent 256 gray scale values. However, the present invention is not limited to a specific size.

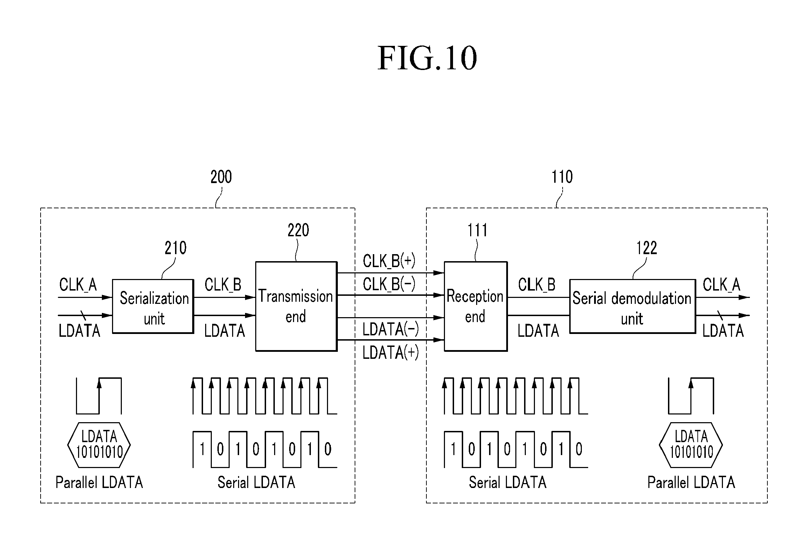

FIG. 10 is a view showing a transmission end 220 of the local brightness controller 200 and a reception end 111 of the controller 110 in the LCD according to the third exemplary embodiment of the present invention. As shown in FIG. 10, signals between the transmission end 220 and the reception end 111 are transmitted/received using differential signaling according to, for example, low voltage differential signaling (LVDS) or reduced swing differential signaling (RSDS). Accordingly, noise caused by, for example, electromagnetic interference, can be considerably reduced compared with transmission/reception based on transistor-transistor logic (TTL) or low voltage transistor-transistor logic (LVTTL). In an embodiment of the present invention, the local brightness controller 200 includes a serialization unit 210 before the transmission end 220 in order to modulate the light emission information signal LS to a higher frequency signal. Further, the controller 110 includes a serial demodulation unit 122 after the reception end 111 in order to demodulate the high frequency signal to the light emission information signal LS having the original frequency.

In detail, the serialization unit 210 converts the 8-bit parallel light emission data signal LDATA into a serial signal of 1 bit and converts clock signal CLK_A into a clock signal CLK_B having a frequency suitable for the serialized light emission data signal. The transmission end 220 converts the clock signal CLK_B into differential signals CLK_B(+) and CLK_B(-) and the data signal LDATA into differential signals LDATA(+) and LDATA(-). The transmission end 220 transmits the differential signals. Since the 8-bit parallel signal is converted into a 1-bit serial signal, the amount of wiring can be reduced thus reducing generation of electromagnetic interference. In addition, because the signals are transmitted using differential signaling, the voltage level can be lowered and power consumption reduced.

The reception end 111 receives the differential signals CLK_B(+) and CLK_B(-) and the differential signals LDATA(+) and LDATA(-). The reception end 111 generates clock signal CLK_B while changing the signal levels such that they correspond to logic one if CLK_B(+) is larger than CLK_B(-) and such that they correspond to logic zero if CLK_B(+) is smaller than CLK_B(-). Further, the reception end 111 generates the light emission data signal LDATA while changing the signal levels such that they correspond to logic one if LDATA(+) is larger than LDATA(-) and such that they correspond to logic zero if LDATA(+) is smaller than LDATA(-).

The serial demodulation unit 122 demodulates (or deserializes) the serially arranged light emission data signal LDATA into an 8-bit parallel data signal, and also converts the clock signal CLK_B into the clock signal CLK_A. Thus, in the present embodiment, the parallel data is serialized to reduce the amount of wiring to reduce noise due to electromagnetic interference, and the signals are transmitted/received with low voltage differential signaling (LVDS) or reduced swing differential signaling (RSDS) and to reduce power consumption.

A display device according to an embodiment using a liquid crystal panel assembly has been described, but the present invention is not limited thereto. That is, the present invention can be applicable to any display device so long as it, as a non-emissive display device, displays an image upon receiving light from a light emitting device.

## Claims

1. A display device comprising:
a panel assembly (300) comprising a plurality of gate lines for transferring a plurality of gate signals, a plurality of data lines for transferring a plurality of data signals, and a plurality of pixels at crossing regions of the plurality of gate lines and the plurality of data lines;
a light emitting device (100) for providing a light source to the panel assembly (300), the light emitting device (100) comprising a plurality of light emission pixels, each of the plurality of light emission pixels corresponding to at least one of the plurality of pixels of the panel assembly (300); and
a brightness controller (200) coupled to both the light emitting device (100) and the panel assembly (300),
wherein the brightness controller (200) is adapted to generate and serialize light emission information signals for determining light emission levels of the plurality of light emission pixels and to transmit the light emission information signals by differential signaling to the light emitting device (100).

2. The device of claim 1, wherein the differential signaling is low voltage differential signaling (LVDS).

3. The device of claims 1 to 2, wherein the differential signaling is reduced swing differential signaling (RSDS).

4. The device of claims 1 to 3, wherein the light emitting device (100) further comprises a device controller (110) for receiving the light emission information signals, wherein the controller (110) is adapted to deserialize and parallelize differential signals, and to generate light emission signals for determining the light emission levels of the plurality of light emission pixels.

5. The device of claim 4, wherein the light emission information signals comprise a clock signal and light emission data signals, and the device controller (110) is adapted to generate a control signal for transferring each of a plurality of signals to each of the plurality of corresponding light emission pixels according to the clock signal and to generate the light emission signals according to the light emission data signals.

6. The device of claims 4 to 5, wherein the light emission information signals are grouped in frames and the device controller (110) is adapted to distinguish each frame by detecting an initial bit of a respective one of the light emission data signals.

7. The device of claims 1 to 6, wherein the light emitting device (100) further comprises
a plurality of scan lines for transferring a plurality of scan signals and a plurality of column lines for transferring a plurality of light emission data voltages,
and wherein the plurality of light emission pixels are at crossing regions of the plurality of scan lines and the plurality of column lines.

8. The device of claims 1 to 7, wherein the control signal comprises a light emission control signal and a scan driving control signal, and the light emitting device (100) further comprises:
a column driver (112) for generating the plurality of light emission data voltages corresponding to the light emission signals according to the light emission control signals and transferring the plurality of light emission data voltages to the plurality of respective column lines; and
a scan driver (114) for transferring each of the plurality of scan signals alternately having first and second levels to the plurality of corresponding scan lines according to the scan driving control signal.

9. The device of claims 1 to 8, wherein each of the light emission pixels comprises a gate electrode and a cathode electrode, and emits light according to a voltage difference between the gate electrode and the cathode electrode.

10. The device of claim 8, wherein the first level of a scan signal is a voltage level for making the light emission pixels emit light, and the second level of a scan signal is a voltage level for making the light emission pixels not emit light.

11. The device of claims 1 to 10, wherein panel assembly (300) is a liquid crystal display panel.

12. A light emitting device (100) comprising:
a plurality of scan lines for transferring a plurality of scan signals, a plurality of column lines for transferring a plurality of light emission data signals, and a plurality of light emission pixels at crossing regions of the plurality of scan lines and the plurality of column lines;
a controller (110) for receiving serialized light emission information signals generated by differential signaling, and for generating light emission signals for indicating light emission levels of the plurality of light emission pixels and a control signal for transferring light emission data voltages corresponding to the light emission signals to each of the plurality of corresponding light emission pixels;
a column driver (112) for generating the plurality of light emission voltages according to the control signal and transferring the plurality of light emission data voltages to each of the plurality of corresponding light emission pixels; and
a scan driver (114) for transferring a plurality of scan signals alternately having first and second levels to each of the plurality of corresponding light emission pixels according to the control signal.

13. The device of claim 12, wherein the differential signaling is low voltage differential signaling (LVDS).

14. The device of claims 12 to 13, wherein the differential signaling is reduced swing differential signaling (RSDS).

15. The device of claims 12 to 14, wherein the controller (110) is adapted to deserialize and parallelize differential signals, and to generate the light emission signals and the control signal according to the light emission information signals.

16. The device of claims 12 to 15, wherein the light emission information signals comprise a clock signal and the plurality of light emission data signals, and the controller (110) is adapted to generate a control signal for transferring each of a plurality of signals to each of the plurality of corresponding light emission pixels according to the clock signal and to generate the light emission signals according to the light emission data signal.

17. The device of claims 12 to 16, wherein the light emission information signals are grouped in frames and the controller (110) is adapted to distinguish each frame by detecting an initial bit of the light emission data signal.
